# EUROPÄISCHE PATENTSCHRIFT

(11) **EP 2 499 990 B1**
(45) Veröffentlichungstag und Bekanntmachung des Hinweises auf die Patenterteilung: **11.05.2016**
(21) Anmeldenummer: 12001677.9
(22) Anmeldetag: 12.03.2012
(51) Int. Cl.: A61C 9/00, A61C 13/34

(54) **Dentalmodell**
Dental model
Modèle dentaire

(30) Priorität: 18.03.2011 DE 202011000623 U; 26.11.2011 DE 102011119511
(43) Veröffentlichungstag der Anmeldung: 19.09.2012
(73) Patentinhaber: Dreve ProDiMed GmbH, 59423 Unna (DE)
(72) Erfinder: Klare, Martin, 44227 Dortmund (DE); Kaiser, Markus, 48153 Münster (DE); Gischer, Frank, 58708 Menden (DE)
(74) Vertreter: Köchling, Conrad-Joachim

(56) Entgegenhaltungen:
- GB-A- 2 069 649
- US-A- 4 288 220

## Beschreibung

Die Erfindung betrifft ein generativ gefertigtes Dentalmodell als Arbeits- und Kontrollmodell zur Anfertigung von Zahnersatz, bestehend aus einem Basismodell mit einem Grundkörper und darauf geformter Modellgingiva und Modellzähnen sowie einem Bereich, in dem ein Modellimplantat eines Zahnes oder einer Zahngruppe auszubilden ist.

Solche Dentalmodelle werden beispielsweise als Gipsmodell angefertigt. Dazu wird ein Abdruck beim entsprechenden Patienten genommen und nach dem Abdruck wird ein Dentalmodell angefertigt, welches dann als Arbeits- und Kontrollmodell zur Anfertigung von Zahnersatz dient. Das Dentalmodell weist eine Fehlstelle an der Position auf, an welcher der Patient einen fehlenden Zahn oder eine fehlende Zahngruppe aufweist. Der Dentaltechniker muss an dieser Stelle des Dentalmodells einen entsprechenden Zahn modellieren, der dann später im Mund des Patienten positioniert und fixiert werden muss.

Es ist auch bekannt, Dentalmodelle durch so genannte generative Fertigung zu erzeugen. Hierbei werden digitale Daten direkt im Mund des Patienten aufgenommen, so dass die Form des bestehenden Zahnbesatzes samt Gingiva, in Form eines digitalen Datensatzes zur Verfügung steht. Nach diesem digitalen Datensatz wird dann generativ ein Modell gefertigt, beispielsweise durch Schichtbau. Auch hierbei ist an der Stelle, an welcher im Mund des Patienten ein Zahn fehlt, eine Freistelle, so dass bei dem generativ erzeugten Dentalmodell der Dentaltechniker an dieser Stelle einen Modellzahn aufbauen muss oder auch eine Modellzahngruppe.
In herkömmlicher Weise werden Gingiva-Masken aufwändig manuell in einem zweiten Verfahren auf Gipsmodellen hergestellt.

Diese Vorgehensweise ist insofern nachteilig, als beim Aufbau des Modellzahnes das gesamte Dentalmodell vom Zahntechniker gehandhabt werden muss, was bei der Anfertigung des Modellzahnes, insbesondere des Modellimplantates des Zahnes oder der Zahngruppe dazu führt, dass die Formung dieses Modells äußerst schwierig und in manchen Fällen auch unzureichend ist.

Aus der US 4 288 220 A ist eine Apparatur zur Herstellung von Zahnmodellen bekannt wobei ein zahnloser Bereich lösbar angeordnet ist und vertikal verschiebbar ist.

Aus der GB 2 069 649 A ist ein Haltestift zum lösbaren Befestigen eines Zahnmodellabgusses auf einem Basisabguss bekannt.

Ausgehend von dem Eingangs benannten Stand der Technik liegt der Erfindung die Aufgabe zugrunde, ein Dentalmodell zu schaffen, welches für den Dentaltechniker eine erleichterte Fertigung des Modelimplantates eines Zahnes oder einer Zahngruppe ermöglicht, wobei eine hohe Präzision erreicht wird und eine gute Bearbeitbarkeit des zu erzeugenden Modellimplantates gewährleistet ist.

Zur Lösung dieser Aufgabe schlägt die Erfindung vor, dass in dem Bereich in dem das Modellimplantat des Zahnes oder Zahngruppe auszubilden ist, eine Aussparung vorgesehen ist, in die lösbar eine Platte mit einer Gingiva-Maske eingesetzt ist, dass ein ein- oder mehrteiliger Modellimplantatstecker lösbar in ein Führungsloch im Bereich der Aussparung eingesetzt ist, wobei der Modellimplantatstecker ein Implantatschraubenimitat hält, auf welchem ein Abutment befestigbar ist, auf welches das Modellimplantat, zum Beispiel eine Krone, aufbaubar ist, wobei die Platte und die Gingiva-Maske eine Ausnehmung für das Durchstecken des Modellimplantates und das Aufstecken des Modellimplantates oder eines Abutments dafür auf den Modellimplantatstecker aufweisen.

Gemäß dieser Ausbildung ist in dem Bereich, in welchem das Modellimplantat eines Zahnes oder einer Zahngruppe auszubilden ist, eine Aussparung in dem Dentalmodell vorgesehen. Diese Aussparung dient dazu, eine Platte mit einer Gingiva-Maske aufzunehmen, wobei zudem in diesem Bereich ein Führungsloch zur Aufnahme eines Modellimplantatsteckers vorgesehen ist. Diese Teile, insbesondere die Platte mit der Gingiva-Maske sind dem Originalmodell, also dem entsprechenden Bereich des Kiefers oder des Zahnbesatzes des Patienten nachgebildet, so dass bei Anordnung der entsprechenden Teile in der Aussparung ein originalgetreues Dentalmodell erzeugt ist. Damit der Dentaltechniker das Modellimplantat aufbauen kann, kann die Platte gelöst werden und auch der Modellimplantatstecker, in den das entsprechende Abutment mit eingebracht ist. Dieses Gesamtelement kann dann vom Zahntechniker zum Aufbau des Zahnmodells oder der Zahngruppe benutzt werden und gehandhabt werden, ohne dass der Zahntechniker durch das viel größere Gesamtdentalmodell behindert wäre. Nach fertiger Modellierung kann dann das Modell samt Platte und Modellimplantatstecker in das Dentalmodell eingesetzt werden, so dass der Gesamteindruck und Gesamtaufbau des Dentalmodelles ersichtlich ist. Die Arbeit des Zahntechnikers ist hierbei erheblich erleichtert, weil die Bestandteile, die zur Aufmodellierung des Modellzahnes oder der Modellzahngruppe dienen, aus dem Dentalmodell herausgenommen werden können, bis die entsprechende Modellierung fertiggestellt ist. Danach können diese Teile wieder in das Dentalmodell eingegliedert werden.

Besonders bevorzugt ist vorgesehen, dass die Platte der Aussparung derart angepasst ist, dass eine verwechslungsfreie eindeutige Anordnung der Platte in der Aussparung erreicht ist.

Beispielsweise kann die Aussparung eine bestimmte Formkontur haben, wobei die Platte dieser Formkontur exakt angepasst ist, so dass im Aufsetzen der Platte und Einpassen der Platte in die Aussparung eine eindeutige Anordnung erreicht wird.

Um die Positionierung und verwechslungsfreie Anordnung sicherzustellen, kann zudem vorgesehen sein, dass die Aussparung ein Steckelement oder eine Ausnehmung aufweist und die Platte eine zum Steckelement passende Lochung oder ein zur Ausnehmung passendes Steckelement aufweist, wobei diese Teile in Solllage ineinander greifen.

Auch kann vorgesehen sein, dass die Platte einstückig mit der Gingiva-Maske ausgebildet ist.

Bevorzugt ist vorgesehen, dass die Platte aus einem formstabilen Werkstoff besteht und die Gingiva-Maske aus einem elastischen Werkstoff besteht, wobei die Gingiva-Maske in Solllage mit der Platte verbunden ist.

Hierbei besteht die Platte und die Gingiva-Maske aus unterschiedlichem Material, wobei die Platte aus einem formstabilem Werkstoff besteht, während die Gingiva-Maske aus elastischem Werkstoff besteht, um annähernd das Verhalten des Zahnfleisches nachzuahmen, was beim Aufbau des Zahnmodells vorteilhaft ist.

Des Weiteren ist bevorzugt vorgesehen, dass die Ausnehmung der Platte und/oder der Gingiva-Maske sich von außen zum Boden der Aussparung und/oder in entgegengesetzter Richtung sich konisch verjüngt.

Besonders bevorzugt ist zudem vorgesehen, dass der Modellimplantatstecker aus zwei halbschalenartigen Teilen besteht, die eine formangepasste Ausnehmung für ein Implantatschraubenimitat aufweisen und in Zusammenbaulage letzteres unverschieblich halten.

Hierdurch ist das Zusammenführen der Einzelteile und das Einpassen der Implantatschraube/des Implantatschrauben-imitates vereinfacht und die Ausrichtung in Solllage sichergestellt.

Zudem ist zur verwechslungsfreien Anordnung vorzugsweise vorgesehen, dass der Modellimplantatstecker eine polygonale Außenumfangskontur aufweist und das Führungsloch eine gleiche Querschnittsform aufweist.

Schließlich ist vorgesehen, dass das Basismodell mit der Aussparung, die Platte, die Gingiva-Maske sämtlich generativ gefertigte Teile sind, die aufgrund eines vom Patienten abgenommenen Datensatzes schichtweise exakt zu einem der Originalform entsprechenden Modell aufgebaut sind.

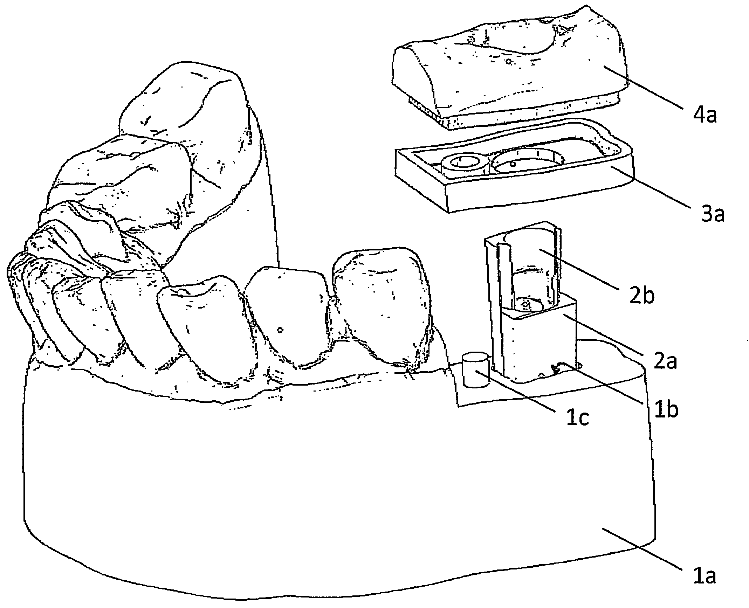

Ein Ausführungsbeispiel der Erfindung ist in der Zeichnung dargestellt und im Folgenden näher beschrieben.

Es zeigt:
die einzige Zeichnungsfigur ein Dentalmodell in einer Explosionsdarstellung in Schrägansicht gesehen.

Bei dem Gesamtobjekt handelt es sich um ein Dentalmodell, welches im Allgemeinen als Arbeits- und Kontrollmodell zur Herstellung von Zahnersatz genutzt wird.

Dieses Dentalmodell besteht aus einem Basismodell 1a, welches mindestens mit einem Führungsloch für die Aufnahme eines Zahnstumpfes oder im Besonderen mindestens mit einem Führungsloch 1b für die Aufnahme eines Modellimplantatsteckers 2a,2b ausgebildet ist, sowie mit mindestens einem Steckelement 1c oder Federelement zur Führung und Fixierung von ansteckbaren Bauteilen. Das Basismodell 1a weist eine Aussparung auf. Diese Aussparung ist in der Zeichnungsfigur vorn rechts ersichtlich. Diese Aussparung ist einer dort anzuordnenden Platte 3a in ihrer Form angepasst. Die Ausbildung dient dazu, dass die Platte 3 a vom Basismodell 1a abgenommen werden kann, um die Herstellung des Zahnmodells zu vereinfachen.

Das Objekt besteht weiterhin aus mindestens einem ein- oder mehrteiligen Modellimplantatstecker 2a,2b, welcher das Einbetten beziehungsweise Einklemmen von Modellimplantaten oder anderen Implantatschrauben - Imitaten aus Kunststoff, Keramik oder Metall ermöglicht. Solche Modellimplantate lassen sich durch Fügetechniken oder durch Verwendung von mechanischen Retentionen in die mehrteiligen Implantatstecker 2a,2b eingliedern, in einer definierten Position fixieren und anschließend passgenau in die vorgesehenen Führungslöcher einbringen. Weiterer Bestandteil des Objektes ist mindestens die schon genannte Platte 3a, die steckbar ist und die als Träger von flexiblen oder starren Bauteilen, wie zum Beispiel einer Gingiva-Maske 4a verwendet werden kann.

Die Platte 3a ist mit mindestens einer Bohrung zur Führung des Steckelementes 1c oder Federelementes ausgestattet, um eine exakte Positionierung der Platte 3a auf dem Basismodell 1a in der entsprechenden Aussparung zu gewährleisten. Weiterhin weist die Platte 3a eine Bohrung oder Aussparung für das Hindurchstecken des Modellimplantates oder Bestandteilen desselben auf. Hiermit ist das Aufstecken der Platte 3a auf das Basismodell mit Modellimplantatstecker 2a, 2b und Modellimplantat ermöglicht. Weiterer Bestandteil des Modells ist zumindestens eine Gingiva-Maske 4a aus vorzugsweise flexiblem Material. Diese Gingiva-Maske könnte bei Materialgleichheit einstückig mit der Platte 3a ausgebildet sein. Vorzugsweise besteht sie aber aus anderem Material, insbesondere flexiblem Material, wobei sie dann durch Fügetechniken oder durch Verwendung von mechanischen Retentionen mit der Platte 3a in Sollposition verbunden werden kann. Auch die Gingiva-Maske 4a weist ein Loch zum Durchstecken eines Modellimplantates auf. Das Loch ist zur Bodenseite hin konisch auslaufend, wodurch das Hindurchstecken von Modellimplantaten erleichtert wird.

Besonders bevorzugt werden sämtliche Bestandteile des Dentalmodells generativ gefertigt, zumindest das Basismodell 1a, die Platte 3a und die Gingiva-Maske 4a, um einen originalgetreuen Zustand des Modells zu erreichen. Als Material für das Basismodell und die Platte 3a kommt beispielsweise Methacrylat oder auch Epoxidharz in Betracht. Als Material für die separate Gingiva-Maske 4a kommt vorzugsweise ein geeignetes elastomeres Material in Betracht. In den Modellimplantatstecker 2a, 2b ist vorzugsweise ein Implantatschraubenimitat eingebettet. Auf dieses kann wiederum ein so genanntes Abutment aufgesetzt werden, auf welches die entsprechende Krone oder die Zahngruppe vom Zahntechniker aufgebaut werden kann.

Durch die erfindungsgemäße Ausbildung ist die Arbeit für den Zahntechniker erheblich erleichtert, wobei dennoch insbesondere bei generativer Fertigung der Einzelbestandteile eine äußerst hohe Präzision erreicht wird und insgesamt auch die Präzision der digitalen Prozesskette zur Erzeugung des Dentalmodelles erhalten bleibt.

## Patentansprüche

1. Dentalmodell als Arbeits- und Kontrollmodell zur Anfertigung von Zahnersatz, bestehend aus einem Basismodell (1a) mit einem Grundkörper und darauf geformter Modellgingiva und Modellzähnen sowie einem Bereich, in dem ein Modellimplantat eines Zahnes oder einer Zahngruppe auszubilden ist, wobei in dem Bereich in dem das Modellimplantat des Zahnes oder Zahngruppe auszubilden ist, eine Aussparung vorgesehen ist, in die lösbar eine Platte (3a) mit einer Gingiva-Maske (4a) eingesetzt ist, wobei ein ein- oder mehrteiliger Modellimplantatstecker (2a, 2b) lösbar in ein Führungsloch (1b) im Bereich der Aussparung eingesetzt ist, wobei der Modellimplantatstecker (2a, 2b) ein Implantatschraubenimitat hält, auf welchem ein Abutment befestigbar ist, auf welches das Modellimplantat, zum Beispiel eine Krone, aufbaubar ist, wobei die Platte (3a) und die Gingiva-Maske (4a) eine Ausnehmung für das Durchstecken des Modellimplantates und das Aufstecken des Modellimplantates oder eines Abutments dafür auf den Modellimplantatstecker (2a/2b) aufweisen.

2. Dentalmodell nach Anspruch 1, **dadurch gekennzeichnet, dass** die Platte (3a) der Aussparung derart angepasst ist, dass eine verwechslungsfreie eineindeutige Anordnung der Platte (3a) in der Aussparung erreicht ist.

3. Dentalmodell nach einem der Ansprüche 1 oder 2, **dadurch gekennzeichnet, dass** die Aussparung ein Steckelement (1c) oder eine Ausnehmung aufweist und die Platte (3a) eine zum Steckelement (1c) passende Lochung oder ein zur Ausnehmung passendes Steckelement aufweist, wobei diese Teile in Solllage ineinander greifen.

4. Dentalmodell nach einem der Ansprüche 1 bis 3, **dadurch gekennzeichnet, dass** die Platte (3a) einstückig mit der Gingiva-Maske (4a) ausgebildet ist.

5. Dentalmodell nach einem der Ansprüche 1 bis 3, **dadurch gekennzeichnet, dass** die Platte (3a) aus einem formstabilen Werkstoff besteht und die Gingiva-Maske (4a) aus einem elastischen Werkstoff besteht, wobei die Gingiva-Maske (4a) in Solllage mit der Platte (3a) verbunden ist.

6. Dentalmodell nach einem der Ansprüche 1 bis 5, **dadurch gekennzeichnet, dass** die Ausnehmung der Platte (3a) und/oder der Gingiva-Maske (4a) sich von außen zum Boden der Aussparung und/oder in entgegengesetzter Richtung konisch verjüngt.

7. Dentalmodell nach einem der Ansprüche 1 bis 6, **dadurch gekennzeichnet, dass** der Modellimplantatstecker (2a, 2b) aus zwei halbschalenartigen Teilen besteht, die eine formangepasste Ausnehmung für ein Implantatschraubenimitat aufweisen und in Zusammenbaulage letztere unverschieblich halten.

8. Dentalmodell nach einem der Ansprüche 1 bis 7, **dadurch gekennzeichnet, dass** der Modellimplantatstecker (2a, 2b) eine polygonale Außenumfangskontur aufweist und das Führungsloch eine gleiche Querschnittsform aufweist.

9. Dentalmodell nach einem der Ansprüche 1 bis 8, **dadurch gekennzeichnet, dass** das Basismodell (1a) mit der Aussparung, die Platte (3a), die Gingiva-Maske (4a) sämtlich generativ gefertigte Teile sind, die aufgrund eines vom Patienten abgenommenen Datensatzes schichtweise exakt zu einem der Originalform entsprechenden Modell aufgebaut sind.

## Claims

1. A dental model as a working and control model for making dentures, consisting of a base model (1a) with a base body and having formed thereon model gingiva and model teeth as well as a region, in which a model implant of a tooth or of a group of teeth is to be formed, wherein in the region in which the model implant of the tooth or of the group of teeth is to be formed, a recess is provided, into which a plate (3a) with a gingiva mask (4a) is detachably fitted, wherein a single- or multi-part model implant plug (2a, 2b) is detachably fitted in a guide hole (1b) in the region of the recess, the model implant plug (2a, 2b) holding an imitation of an implant screw, at which an abutment can be fastened, on which the model implant, for instance a crown, can be formed, the plate (3a) and the gingiva mask (4a) comprising a recess for passing-through the model implant and fitting the model implant or an abutment thereof on the model implant plug (2a/2b).

2. The dental model according to claim 1, **characterized by** that the plate (3a) of the recess is configured such that a distinctive unique arrangement of the plate (3a) in the recess is obtained.

3. The dental model according to one of claims 1 or 2, **characterized by** that the recess comprises a plug member (1c) or a recess and the plate (3a) comprises a hole matching the plug member (1c) or a plug member matching the recess, in the intended position, these parts engaging each other.

4. The dental model according to one of claims 1 to 3, **characterized by** that the plate (3a) is formed as one piece with the gingiva mask (4a).

5. The dental model according to one of claims 1 to 3, **characterized by** that the plate (3a) is made of a form stable material and the gingiva mask (4a) is made of an elastic material, in the desired position, the gingiva mask (4a) being connected with the plate (3a).

6. The dental model according to one of claims 1 to 5, **characterized by** that the recess of the plate (3a) and/or of the gingiva mask (4a) tapers from outside to the bottom of the recess and/or in the opposite direction.

7. The dental model according to one of claims 1 to 6, **characterized by** that the model implant plug (2a, 2b) consists of two half-shell parts comprising a contoured recess for an imitation of an implant screw and in the assembled state indisplaceably holding the latter.

8. The dental model according to one of claims 1 to 7, **characterized by** that the model implant plug (2a, 2b) has a polygonal external circumferential contour and the guide hole has an identical cross section.

9. The dental model according to one of claims 1 to 8, **characterized by** that the base model (1a) with the recess, the plate (3a), the gingiva mask (4a) are all generatively manufactured parts, which are built up on the basis of a data set collected from the patient layer-wise exactly to a model corresponding to the original form.

## Revendications

1. Modèle dentaire comme modèle de travail et de contrôle pour obtenir des prothèses dentaires, consistant en un modèle de base (1a) avec un corps et un modèle gencive formé sur celui-ci et des dents modélisés aussi bien qu'une région, dans laquelle un implant modélisé d'un dent ou d'un groupe de dents doit être formé, dans lequel dans la région dans laquelle l'implant modélisé du dent ou du groupe de dents doit être formé, un évidement est prévu, dans lequel une plaque (3a) avec un masque gencive (4a) est inséré de manière amovible, dans lequel un bouchon d'implant modélisé (2a, 2b) en une ou plusieurs parties est inséré de manière amovible dans un trou de guidage (1b) dans la région de l'évidement, le bouchon d'implant modélisé (2a, 2b) maintenant une imitation d'une vis d'implant, à laquelle une butée peut être fixée, sur laquelle l'implant modélisé, par exemple une couronne, peut être formé, la plaque (3a) et le masque gencive (4a) comprenant un évidement pour le passage de l'implant modélisé et la mise en place de l'implant modélisé ou d'une butée pour celui-ci sur le bouchon d'implant modélisé (2a/2b).

2. Modèle dentaire selon la revendication 1, **caractérisé en ce que** la plaque (3a) de l'évidement est conformée de façon qu'un agencement unique distinctif de la plaque (3a) dans l'évidement soit obtenu.

3. Modèle dentaire selon une des revendications 1 ou 2, **caractérisé en ce que** l'évidement comprend un élément d'enfichage (1c) ou un évidement et la plaque (3a) comprend un trou approprié à l'élément d'enfichage (1c) ou un élément d'enfichage approprié à l'évidement, dans la position de consigne, ces pièces s'engrenant l'une dans l'autre.

4. Modèle dentaire selon une des revendications 1 à 3, **caractérisé en ce que** la plaque (3a) est réalisée comme une pièce avec le masque gencive (4a).

5. Modèle dentaire selon une des revendications 1 à 3, **caractérisé en ce que** la plaque (3a) est réalisée en un matériau de forme stable et le masque gencive (4a) est réalisé en un matériau élastique, dans la position de consigne, le masque gencive (4a) étant lié à la plaque (3a).

6. Modèle dentaire selon une des revendications 1 à 5, **caractérisé en ce que** l'évidement de la plaque (3a) et/ou du masque gencive (4a) s'amenuise de l'extérieur vers le fond de l'évidement et/ou dans la direction opposée.

7. Modèle dentaire selon une des revendications 1 à 6, **caractérisé en ce que** le bouchon d'implant modélisé (2a, 2b) consiste en deux demi-coquilles comprenant un évidement épousant la forme pour une imitation d'une vis d'implant et dans l'état assemblé maintenant cette dernière de façon immobile.

8. Modèle dentaire selon une des revendications 1 à 7, **caractérisé en ce que** le bouchon d'implant modélisé (2a, 2b) comprend un contour périphérique externe polygonal et le trou de guidage a une section en coupe identique.

9. Modèle dentaire selon une des revendications 1 à 8, **caractérisé en ce que** le modèle de base (1a) avec l'évidement, la plaque (3a), le masque gencive (4a) sont tous des pièces fabriquées générativement, qui sont réalisées sur la base d'un jeu de données obtenu à partir du patient en forme de couches exactement à un modèle correspondant à la forme originale.
